# EUROPÄISCHE PATENTANMELDUNG

(11) **EP 0 982 563 A1**
(43) Veröffentlichungstag der Anmeldung: **01.03.2000**
(21) Anmeldenummer: 99115853.6
(22) Anmeldetag: 12.08.1999
(51) Int. Cl.: G01B 7/34, G01B 7/287, G01L 5/04, B21B 38/02

(54) **Messrolle zum Feststellen von Planheitsabweichungen**

(30) Priorität: 25.08.1998 DE 19838457
(71) Anmelder: BETRIEBSFORSCHUNGSINSTITUT VDEh, INSTITUT FÜR ANGEWANDTE FORSCHUNG GmbH, D-40237 Düsseldorf (DE)
(72) Erfinder: Mücke, Gert, 40724 Hilden (DE); Neuschütz, Eberhard, 40880 Ratingen (DE)
(74) Vertreter: König, Reimar, Dr.-Ing.

(57) **Zusammenfassung**

Bei einer Meßrolle zum Feststellen von Planheitsabweichungen beim Walzen von Metallband wird beispielsweise die Spannungsverteilung mit Hilfe von Kraftmeßgebern über die Breite des Bandes gemessen, die in Ausnehmungen der Meßrolle mit Abstand zur Wandung der Ausnehmung angeordnet und von einer Ummantelung mit hoher Vergütbarkeit, höherer Verschleißbeständigkeit, Anlaßbeständigkeit, niedrigerer Wärmeleitfähigkeit oder strukturierter Oberfläche beispielsweise auf einem Trägerrohr überdeckt sind.

## Beschreibung

Die Erfindung bezieht sich auf eine Meßrolle zum Feststellen von Planheitsabweichungen beim Walzen, insbesondere Warmwalzen von Metallband.

Für das herkömmliche Messen der Planheit von Warmband werden im wesentlichen Verfahren eingesetzt, welche die Faserlängen des Bandes aus dem lokalen Abstand der Bandoberfläche zu einem festen Bezugsniveau (z.B. der Höhe des Bandes über dem Rollgang) mit laseroptischen Sensoren auf der Grundlage einer Triangulation bestimmen.

Die Anwendung dieser Verfahren ist nur während der Zeit möglich, während derer der Bandanfang zugfrei den Auslaufrollgang der Walzstraße bis zum Haspel durchläuft. Für diesen Zeitraum können sich die Längsunterschiede der Bandfasern in vertikaler Richtung als Vorwölbungen ausbilden und gemessen werden, um mit Hilfe der Meßwerte die Stellglieder der Walzgerüste zur Beeinflussung der Bandplanheit zu betätigen. Nachdem der Haspelzug wirksam ist, wird dabei von der automatischen Profilregelung beispielsweise die Arbeitswalzenbiegung in Abhängigkeit von der gemessenen Walzkraft mit dem Ziel verändert, die am Bandanfang erzielte Planheit über die gesamte Bandlänge zu erhalten.

Mit der Entwicklung neuer Gießtechnologien wie des endabmessungsnahen Gießens, beispielsweise der CSP-Technologie und neuer Anlagenkonzepte, ist es möglich, eine Bandendicke deutlich unter 2 mm zu erreichen. Für diese Bandendicke ist die obenbeschriebene Planheitsregelung aufgrund von Planheitsabweichungen nur am Bandanfang nicht mehr ausreichend. Es ist eine Planheitsmessung über die gesamte Bandlänge, also unter Zugspannung erforderlich. Dies ist durch Messen der Spannungsverteilung über die Bandbreite möglich.

Dazu wird das Band, beispielsweise Stahlband, mit einem gewissen Umschlingungswinkel über eine Meßrolle geführt. Auf diese Weise kommt es bei einer in der deutschen Offenlegungsschrift 42 36 657 beschriebenen Meßrolle zu einer Berührung zwischen Kraftmeßgebern oder deren Abdeckungen, die in zur Rollenoberfläche offenen Ausnehmungen der Meßrolle angeordnet sind, und dem Band. Zwischen den am Boden ihrer Ausnehmung aufgespannten Kraftmeßgebern und der sie umgebenden Ausnehmungswandung befindet sich ein zylindrischer Spalt. Dieser Spalt kann mit einem O-Ring oder mit einer Kunststoffschicht verschlossen sein, um das Eindringen von Schmutz, beispielsweise Bandabrieb zu verhindern.

Die Anordnung der Kraftmeßgeber mit Abstand von der sie umgebenden Wandung und das Verschließen des Ringspalts mit Hilfe eines O-Rings oder eines hinreichend elastischen Kunststoffs verhindert, daß sich während des Walzens im Korpus der Rolle wirksame Kräfte störend auf die Kraftmeßgeber auswirken. Derartige Störkräfte sind die Folge des auf die Meßrolle wirkenden Bandzugs und einer damit verbundenen Durchbiegung der Rolle. Deren Querschnitt nimmt dabei die Form einer Ellipse an, deren längere Achse parallel zum Band verläuft. Die Rollendurchbiegung täuscht dem Kraftmeßgeber eine Unebenheit des Bandes vor, wenn sie durch Kraftnebenschluß auf den Meßgeber übertragen wird.

Aus der französischen Patentschrift 0 028 191 ist auch bereits eine Meßrolle mit einem die Rollenoberfläche überdeckenden Mantel bekannt. Bei dieser Meßrolle sind jedoch die Meßgeber mit ihrem Korpus formschlüssig in Rollenbohrungen angeordnet bzw. eingespannt, so daß sich aus einer Rollendurchbiegung resultierende Störkräfte ungehindert auf die Meßgeber auswirken können und das Meßergebnis verfälschen. Um diese Störkräfte auszuschalten, schlägt die europäische Patentschrift 0 273 807 vor, die von den Störkräften ausgehende Meßwertverfälschung ohne Änderung der Rollenbeschaffenheit durch eine Kompensationsschaltung auszugleichen.

Die bekannten Meßrollen weisen - unabhängig von der Art und der Anordnung der Meßgeber in den Rollenbohrungen - den Nachteil auf, daß sie wegen der Temperaturempfindlichkeit der Meßgeber, insbesondere Kraftmeßgeber ein Warmwalzen und wegen der glatten Oberfläche der Meßrolle eine Oberflächenbeeinflussung des Bandes nicht erlauben oder zu einer Beschädigung beim Walzen strukturierter Bandoberflächen führen. Dies gilt auch für ummantelte Rollen; denn der Rollenmantel bietet keinen hinreichenden Schutz der Kraftmeßgeber vor der im Band gespeicherten Wärme bei warmgewalztem oder infolge einer Kaltverformung erwärmten Band. Außerdem ist die Mantelaußenfläche glatt und daher ohne Einfluß auf die Beschaffenheit der Bandoberfläche. Des weiteren unterliegen die Rollen infolge der nicht zu vermeidenden Reibung zwischen dem Band und der Rollenoberfläche einem erheblichen Verschleiß.

Der Erfindung liegt das Problem zugrunde, eine Planheitsmeßrolle zu schaffen, die eine erhöhte Lebensdauer besitzt und/oder ein Warmwalzen und gegebenenfalls auch eine Beeinflussung der Oberfläche des Bandes erlaubt.

Die Lösung dieser Aufgabe besteht darin, daß die in den Rollenausnehmungen mit Abstand zur Wandung der Ausnehmung angeordneten Meßgeber von einer Ummantelung, beispielsweise einem Rollenmantel vorzugsweise mit einer Dicke von 3 bis 5 mm mit hoher Vergütbarkeit und/oder höherer Verschleißfestigkeit und/oder Anlaßbeständigkeit und/oder niedriger Wärmeleitfähigkeit und/oder strukturierter Oberfläche überdeckt sind.

Der Rollenmantel verhindert nicht nur das Eindringen von Schmutz in die die Kraftmeßgeber umgebenden Ringspalte, sondern besitzt darüber hinaus noch zumindest eine weitere Funktion. So kann die Ummantelung - einzeln oder nebeneinander - aus verschleißfähigen Metallen wie Molybdän, Wolfram und Tantal, aus Karbiden wie Tantal-, Titan- und Wolframkarbid, Nitriden wie Hafnium-, Titan- und Zirkoniumnitriden, Boriden wie Tantal-, Titan- und Zirkoniumborid, Siliziden wie Tantal- oder Molybdänsilizid, aber auch aus Oxiden wie A1₂O₃, Cr₂O₃, HfO₂, TiO₂ und ZrO₂ bestehen. Diese verschleißfesten Werkstoffe lassen sich einzeln und teilweise auch nebeneinander, ebenso wie andere Werkstoffe, durch thermisches Spritzen auf ein die Rolle umgebendes dünnwandiges Mantelrohr aus Stahl als Träger für den verschleißfesten Werkstoff aufbringen.

Ummantelungen mit hoher Härte zumindest im Bereich ihrer Oberfläche besitzen den besonderen Vorteil, daß sich der beim Walzen entstehende Abrieb oder auch Walzzunder beim Warmwalzen nicht auf der normalerweise verhältnismäßig weichen Oberfläche des Korpus der Meßrolle festsetzen und die Bandoberfläche beschädigen kann. Diese Gefahr einer Oberflächenbeschädigung des Bandes durch Stahlpartikel ist beim Trockendressieren von Stahlband besonders groß.

Soll die Meßrolle beim Warmwalzen eingesetzt werden, dann sollte die Ummantelung zumindestens im Bereich ihrer Oberfläche eine möglichst hohe Anlaßbeständigkeit und/oder eine möglichst geringe Wärmeleitfähigkeit besitzen. Hierfür eignen sich beispielsweise keramische Werkstoffe. Diese können sich auf einem den Korpus der Meßrolle einhüllenden Trägerrohr befinden.

Eine Verbesserung der Verschleißfestigkeit läßt sich aber auch durch ein galvanisches Beschichten eines den Korpus der Meßrolle umgebenden Mantelrohrs mit einem Werkstoff höherer Verschleißfestigkeit, beispielsweise mit einer Hartchromschicht erreichen.

Unabhängig von dem jeweiligen Werkstoff der Ummantelung bzw. des Mantelrohrs kann deren Oberfläche auch eine bestimmte Oberflächentopographie besitzen, die eine komplementäre Topographie auf der der Meßrolle gegenüberliegenden Bandoberfläche erzeugt oder erhält.

Eine solche Topographie der Rolle läßt sich auf sehr unterschiedliche Weise erzeugen. Hierfür eignen sich beispielsweise das SBT- (Shot Blast Texturing- bzw. Schleuderradverfahren), das EDT- (Electrical Discharge Texturing- bzw. Funkenerrosionsverfahren), das Lasertex- bzw. Laserstrahl-Verfahren und das EBT-Verfahren (Electron Beam Texturing- bzw. Elektronenstrahl-Verfahren). Diese Verfahren sind beispielsweise in "Stahl und Eisen" 1990, Heft 3, Seiten 55 bis 60, "La Revue de Metallurgie-CIT 1997, Seiten 827 bis 836 und "Stahl", März 1992, Seiten 68 bis 74 beschrieben.

Eine derartige Topographie kaltgewalzten Bandes wirkt sich günstig auf das Tiefziehverhalten, das Haften einer Lackierung und die Klebeeignung beim Herstellen von Klebeverbindungen aus. Solche Topographien werden im allgemeinen mit Hilfe der Arbeitswalzen auf das Band gebracht und unterliegen der Gefahr einer Beeinträchtigung, wenn das Band im Anschluß an das letzte Walzgerüst über eine glatte Meßrolle oder auch eine nicht ummantelte Meßrolle zum Feststellen von Planheitsabweichungen läuft.

Die Ummantelung kann aus einem die Meßrolle insgesamt umhüllenden Rohr oder auch aus mehreren nebeneinander angeordneten Rohrabschnitten bestehen. Das Rohr oder auch die Rohrabschnitte können aufgeschrumpft oder mechanisch mit dem Korpus der Meßrolle verbunden sein; sie können aus einem Werkstoff mit den gewünschten Eigenschaften bestehen oder mit einem solchen Werkstoff beschichtet sein.

In jedem Falle sollte die Ummantelung einschließlich eines etwaigen Trägerrohrs eine geringe Wanddicke besitzen, um einen etwaigen Kraftnebenschluß zwischen dem Korpus der Meßrolle und den Meßgebern auf dem Wege über die Ummantelung zu vermeiden, zumindest aber sehr gering zu halten. Mit zunehmender Wanddicke und geringer werdender Spaltbreite vergrößern sich nämlich - bei konstanter Radialkraft des Bandes - die im Wege eines Kraftnebenschlusses in den Meßgeber eingeleiteten Störkräfte. Je geringer daher die Dicke der Ummantelung und je breiter der die Meßgeber umgebende Spalt ist, desto geringer ist der Einfluß von Störkräften und desto größer ist auch die Durchbiegung der Ummantelung im Bereich der Ausnehmungen mit den Meßgebern. Die Spaltbreite sollte daher mindestens 0,5 mm betragen. Ein solch breiter Spalt führt nicht, wie bei nach außen offenen Ausnehmungen, zu einer Beschädigung der Walzgutoberfläche, weil der Spalt ja von der Ummantelung überdeckt ist, d.h. die Meßrolle eine geschlossene Oberfläche besitzt.

Bei einer sehr dünnen Ummantelung von beispielsweise 1 mm eignet sich die erfindungsgemäße Meßrolle daher auch für eine Verwendung von Wegmeßgebern, sofern diese wie die Kraftmeßgeber mit der Bohrungswandung nicht bzw. nicht in unmittelbarer Berührung stehen.

Besteht die Ummantelung aus mehreren Rohrabschnitten mit oder ohne Beschichtung, dann wirkt sich auch das günstig auf eine Minimierung der auf die Meßgeber einwirkenden Störkräfte (Kraftnebenschluß) aus, weil eine aus mehreren Rohrabschnitten bestehende Umhüllung ein im vorliegenden Zusammenhang günstigeres Biegeverhalten als die Rolle als solche zeigt; ihre Durchbiegung ist nicht so stark wie die der Rolle.

Zwischen dem Meßgeber oder einer nicht unbedingt erforderlichen Meßgeberabdeckung und der den Meßgeber umgebenden Wandung der Ausnehmung kann sich ein O-Ring oder eine Kunststoffschicht befinden, um den Einbau des Meßgebers und dessen Zentrierung in der Ausnehmung zu erleichtern. Der Kunststoff sollte einen deutlich geringeren Elastizitätsmodul besitzen als der Rollenwerkstoff, so daß er ein sicheres Zentrieren ermöglicht, ohne Kräfte von der Rolle auf die Abdeckung zu übertragen.

Die Kunststoffschicht kann eine Dicke besitzen, die zunächst größer ist als die Differenz zwischen dem Durchmesser des Meßgebers bzw. einer Meßgeberabdeckung und dem Durchmesser der Ausnehmung, d.h. größer als die Breite des Spalts zwischen Meßgeber bzw. Abdeckung und Wandung der Ausnehmung. Demgemäß besitzt der ummantelte Meßgeber bzw. die ummantelte Meßgeberabdeckung gegenüber der Ausnehmung bei Raumtemperatur ein Übermaß.

Zum Einsetzen eines Meßgebers, beispielsweise mit einer beschichteten Meßgeberabdeckung größeren Durchmessers als der Meßgeber in die Ausnehmung der Umlenkmeßrolle kann die Abdeckung unterkühlt und der Rollenkörper erwärmt werden. Dadurch verkleinert sich der Umfang der Abdeckung mit ihrer Beschichtung, während sich der Durchmesser der Ausnehmung infolge Wärmedehnung vergrößert. Unter diesen Umständen läßt sich die Abdeckung problemlos in die Ausnehmung einsetzen. Beim Angleichen beider Körper an die Raumtemperatur wird die Abdeckung selbsttätig zentriert.

Die Zwangsposition, die eine etwaige Meßgeberabdeckung und der Meßgeber bei der erfindungsgemäßen Meßrolle einnehmen, ist selbst bei dauerhaftem Einsatz positionsstabil. Die von einer Rollenverformung ausgehenden Störkräfte und -momente werden von der Kunststoffschicht und/oder der Ummantelung aufgenommen und nicht in die Abdeckung bzw. den Meßgeber eingeleitet.

Ein Vorteil der erfindungsgemäßen Ummantelung liegt in der Abdichtung des Spaltes zwischen Meßgeberabdeckung bzw. Meßgeber und Ausnehmung. Der Spalt braucht daher nicht oder nicht bis zur Rollenoberfläche verschlossen zu sein. Feinpartikularer Metallabrieb, der beim Walzen von Stahlband ein besonderes Problem für die zuverlässige Funktion der Meßrolle darstellt, kann nicht mehr in den Spalt eindringen und die Funktion des Meßgebers behindern.

Die Erfindung wird im folgenden anhand eines in der Zeichnung dargestellten Ausführungsbeispiels des näheren erläutert. In der Zeichnung zeigen:

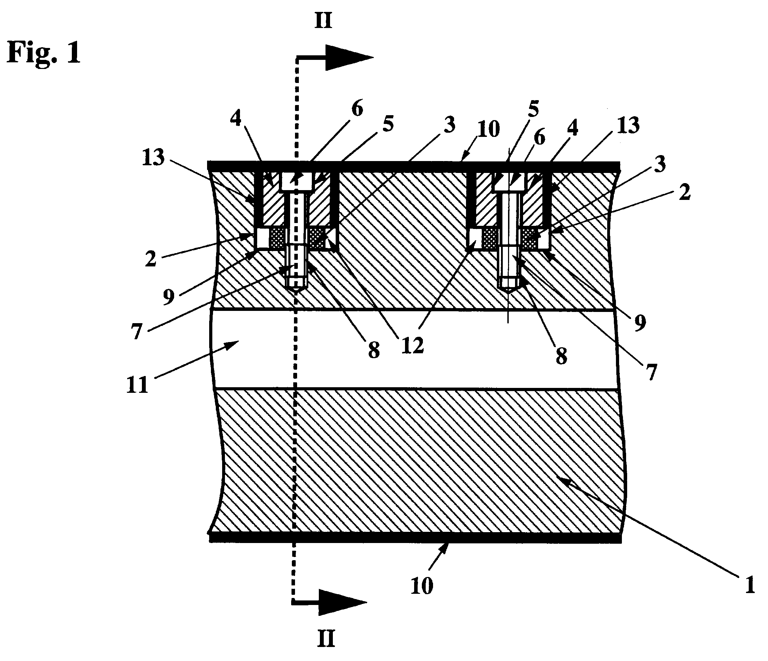

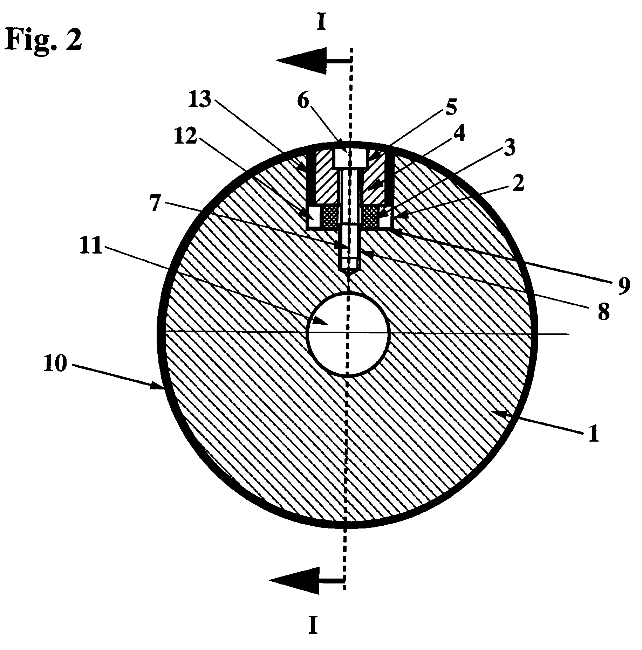

- Fig. 1: einen axialen Längsschnitt durch eine Meßrolle mit in Ausnehmungen angeordneten Kraftmeßgebern und deren Abdeckungen nach der Linie I-I in Fig. 2,
- Fig. 2: einen Querschnitt durch die Meßrolle nach der Linie II-II in Fig. 1;
- Fig. 3: einen axialen Längsschnitt durch eine Meßrolle mit in Ausnehmungen befindlichen Wegmeßgebern im belasteten Zustand.

Die Meßrolle 1 besitzt eine Vielzahl von über die Rollenbreite verteilten Ausnehmungen 2, in die Kraft- bzw. Piezomeßgeber 3 in Gestalt von Quarz-Unterlegscheiben zum Messen dynamischer und quasistatischer Kräfte mit zylindrischen Abdeckungen 4 eingesetzt sind. Die Meßgeber 3 erstrecken sich zwischen dem Boden 9 der Ausnehmung 2 und der Abdeckung 4. Die Abdeckung 4 besitzt eine Einsenkung 5, in der sich der Kopf 6 einer Spannschraube 7 befindet, die in eine Gewindebohrung 8 der Meßrolle 1 eingreift. Mit Hilfe der Spannschraube 7 ist die Abdeckung 4 mit dem Kraftmeßgeber 3 gegen den Boden 9 der Ausnehmung 2 verspannt. Die Abdeckungen 4 liegen an einem Rollenmantel 10 an, der die zylindrische Oberfläche der Rolle 1 vollständig umhüllt.

Wenn der Mantel 10 einen ausreichenden Wärmeschutz bietet, können die Abdeckungen 4 eine geringe Dicke besitzen oder auch ganz entfallen.

In der Meßrolle 1 befinden sich nicht dargestellte radiale Bohrungen, die die Meßleitungen der Meßgeber 3 aufnehmen. Die Bohrungen führen zu einer zentralen Bohrung 11 in der Rollenachse, durch die die Meßleitungen aus der Umlenkmeßrolle herausgeführt werden (nicht dargestellt).

Zwischen den Abdeckungen 4 und den Meßgebern 3 einerseits sowie der Wandung der Ausnehmungen 2 andererseits befindet sich jeweils ein umlaufender Spalt 12, der von einer Kunststoffschicht 13 überbrückt ist, oder in dem sich eine O-Ring-Dichtung befinden kann.

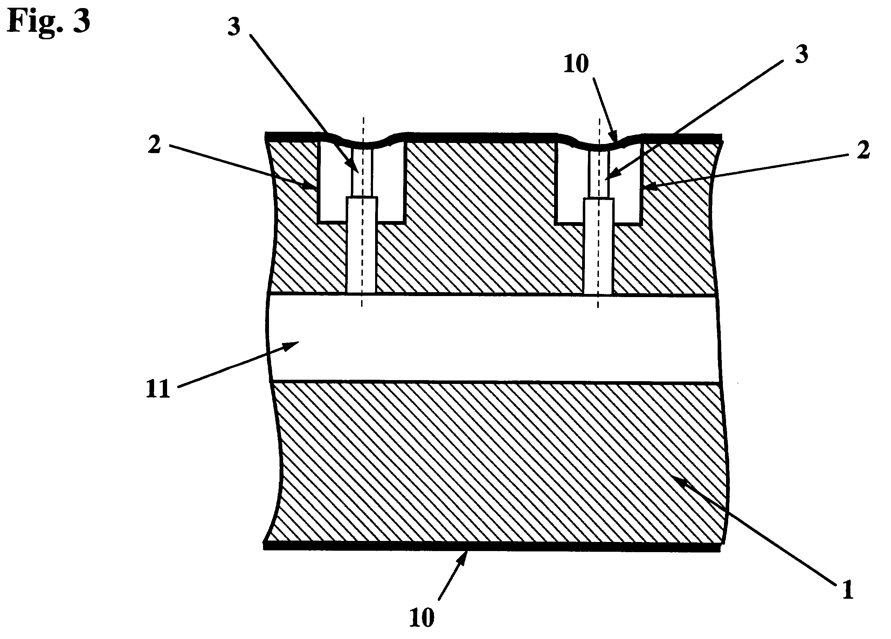

Im Betrieb wirkt die Radialkraft des umlaufenden Bandes über den Mantel 10 direkt auf die Meßgeberabdeckung 4, die ihrerseits den Meßgeber 3 beaufschlagt und dabei ein Meßsignal erzeugt, indem sie ihn gegen den Boden 9 der Ausnehmung 2 drückt. Die verformungsbedingten Störkräfte und - momente der Rolle 1 werden in Anbetracht der geringen Dicke des Mantels 10 nicht auf die Abdeckung 4 und damit auf den Meßgeber 3 übertragen, sondern führen allenfalls zu einer Durchbiegung des Mantels über den Ausnehmungen 2 (vgl. Fig. 3), die ein Wegmeßgeber aufzunehmen vermag, während es bei formstabilen Kraftmeßgebern nicht zu einer lokalen Durchbiegung der Ummantelung kommt.

Eine Verfälschung der Meßergebnisse tritt bei der erfindungsgemäßen Meßrolle nicht ein, während gleichzeitig die Möglichkeit besteht, mit Hilfe einer strukturierten Oberfläche des Mantels die ihm zugekehrte Oberfläche des Bandes zu beeinflussen oder unbeeinflußt zu lassen, wenn die Bandoberfläche bereits mit Hilfe der Arbeitswalzen strukturiert ist.

## Patentansprüche

1. Meßrolle zum Feststellen von Planheitsabweichungen beim Walzen von Metallband mit
- in Ausnehmungen (2) angeordneten Meßgebern (3),
- einem umlaufenden Spalt (12) zwischen den Meßgebern und der Wandung der Ausnehmungen und
- einer Ummantelung (10) mit hoher Vergütbarkeit, Verschleißbeständigkeit, Anlaßbeständigkeit, niedriger Wärmeleitfähigkeit und strukturierter Oberfläche einzeln oder nebeneinander.

2. Meßrolle nach Anspruch 1, dadurch gekennzeichnet, daß die Dicke der Ummantelung etwa 2 bis 5 mm beträgt.

3. Meßrolle nach Anspruch 1 oder 2, dadurch gekennzeichnet, daß sich die Ummantelung auf einem Trägerrohr befindet.

4. Meßrolle nach Anspruch 3, gekennzeichnet durch eine auf das Trägerrohr thermisch aufgespritzte Ummantelung (10).

5. Meßrolle nach einem der Ansprüche 1 bis 4, gekennzeichnet durch eine keramische Ummantelung (10).

6. Meßrolle nach einem der Ansprüche 1 bis 5, dadurch gekennzeichnet, daß der Spalt (12) mindestens 0,5 mm breit ist.

7. Meßrolle nach einem der Ansprüche 1 bis 6, dadurch gekennzeichnet, daß der Meßgeber (3) von einer Kunststoffschicht (13) umgeben ist.

8. Meßrolle nach Anspruch 7, dadurch gekennzeichnet, daß die Kunststoffschicht (13) einen wesentlich geringeren Elastizitätsmodul besitzt als der Meßrollenwerkstoff.

9. Meßrolle nach Anspruch 7 oder 8, dadurch gekennzeichnet, daß die Dicke der Kunststoffschicht (13) in situ 0,01 bis 2 mm beträgt.

10. Meßrolle nach einem der Ansprüche 1 bis 9, dadurch gekennzeichnet, daß sich ein Spalt (12) zwischen einer Meßgeberabdeckung (4) und der Wandung der Ausnehmung (2) befindet.

11. Meßrolle nach einem der Ansprüche 1 bis 10, dadurch gekennzeichnet, daß die Ausnehmungen (2) einen kreisförmigen Querschnitt besitzen.

12. Meßrolle nach einem oder mehreren der Ansprüche 1 bis 11, dadurch gekennzeichnet, daß die Ummantelung (10) aus mehreren rohrförmigen Abschnitten besteht.
